# EUROPÄISCHE PATENTSCHRIFT

(11) **EP 3 460 962 B1**
(45) Veröffentlichungstag und Bekanntmachung des Hinweises auf die Patenterteilung: **04.11.2020**
(21) Anmeldenummer: 18192210.5
(22) Anmeldetag: 03.09.2018
(51) Int. Cl.: H02K 5/24, E06B 9/322, E06B 9/70, E06B 9/72

(54) **ANTRIEB**
DRIVE
ENTRAÎNEMENT

(30) Priorität: 20.09.2017 DE 102017216646
(43) Veröffentlichungstag der Anmeldung: 27.03.2019
(73) Patentinhaber: Bühler Motor GmbH, 90459 Nürnberg (DE)
(72) Erfinder: Reinecker, Bernd, 90491 Nürnberg (DE)

(56) Entgegenhaltungen:
- EP-A1- 2 922 183
- EP-A2- 2 642 072
- WO-A1-2014/152427
- AT-U1- 810
- US-A1- 2011 265 958

## Beschreibung

Die Erfindung betrifft einen Antrieb (1), mit einem Getriebemotor (2), bestehend aus einem Elektromotor (3) und einem Untersetzungsgetriebe (4), einem Antriebsgehäuse (5), einer Motoraufnahme (6) für den Getriebemotor (2), einem zwischen der Motoraufnahme (6) und dem Getriebemotor (2) angeordneten Dämpfungsmittel (7) und einer Dämpfungsmittelaufnahme (8) für das Dämpfungsmittel (7) am Getriebemotor (2).

Derartige Antriebe werden beispielhaft als Rollo- oder Jalousie-Antriebe eingesetzt, wobei das Antriebsgehäuse Teil einer Aufwickelvorrichtung ist. Die in solchen Antrieben eingesetzten Elektromotoren sind häufig mit genuteten Rotoren oder Statoren versehen, welche ein Rastmoment bewirken. Dieses dient im Stillstand als Bremsmoment. Im Betrieb werden hierdurch jedoch unerwünschte Vibrationen erzeugt. Um diese nicht oder nur geringfügig auf das Antriebsgehäuse, welches einen Resonanzkörper darstellt, zu übertragen, sind Dämpfungsmittel in Form von Gummi- oder gummiartigen Einlagen zwischen Getriebemotor und Antriebsgehäuse angeordnet. Dadurch ist kein direkter Kontakt zwischen Getriebemotor und Antriebsgehäuse vorhanden.

Es sind bereits Antriebe bekannt, die Dämpfungsmittel zwischen einem Getriebemotor und einem Antriebsgehäuse aufweisen, wobei die Dämpfungsmittel beispielsweise auf einem ringförmigen Ansatz des Getriebemotors montiert und im Antriebsgehäuse in eine Gegenform aufgenommen sind. Hierbei sind zusätzliche Verdrehsicherungsgeometrien am Dämpfungsmittel, dem Getriebemotor und dem Antriebsgehäuse vorzusehen, welche verhindern, dass der Getriebemotor sich in Bezug auf das Antriebsgehäuse um seine eigene Achse verdrehen kann. Aus diesem Grund sind komplizierte Spritzgusswerkzeuge erforderlich, welche die Herstellung des Antriebs unwirtschaftlicher machen.

Die US 2011/0265958 A1 offenbart einen Antrieb mit einem Getriebemotor, bestehend aus zwei Elektromotoren und einem Untersetzungsgetriebe, einem Antriebsgehäuse, einer Motoraufnahme für den Getriebemotor, einem zwischen der Motoraufnahme und dem Getriebemotor angeordneten Dämpfungsmittel, das auf einem ringförmigen Ansatz des Getriebemotors montiert ist und im Antriebsgehäuse in eine Gegenform aufgenommen ist, und einer Dämpfungsmittelaufnahme für das Dämpfungsmittel am Getriebemotor, wobei zwischen der Motoraufnahme und der Dämpfungsmittelaufnahme Formschluss besteht. Das Dämpfungsmittel, der Getriebemotor sowie das Antriebsgehäuse sind dabei mit Verdrehsicherungsgeometrien versehen.

Die EP 2 922 183 A1 offenbart einen elektromechanischen Aktuator mit einem Elektromotor und einem Hausautomationssystem zum Schließen oder zum Sonnenschutz, wobei der Elektromotor einen Rotor und einen Stator umfasst, die koaxial um eine Achse herum positioniert sind, der Rotor eine Rotorwelle umfasst, wobei die Rotorwelle ein lagergestütztes Ende aufweist, der Stator einen Statorkern und einen Statorkörper umfasst, wobei der Statorkörper ein ringförmiges Gehäuse aufweist, in dem ein Lager angeordnet ist. Ein Dämpfungsmittel ist um das Lager angeordnet, dass in seiner Grundform ringförmig und im montierten Zustand nicht kreisförmig ist und einen gleich bleibenden Querschnitt aufweist.

Aus der AT 000 810 U1 ist ein Dämpfungselement zum Befestigen eines Asynchronmotors über eine Lagerschildnabe in einem Lagerblock bekannt. Das Dämpfungselement besteht aus einem wesentlich kreisringförmigen Körper aus elastomerem Werkstoff und weist an der Außenumfangsfläche eine sich ringsum über das Dämpfungselement erstreckende, nach außen hin offene Nut, auf.

Aus der WO 2014 / 152427 A1 ist ein Antrieb mit einem Elektromotor und einem Untersetzungsgetriebe bekannt, wobei ein Dämpfungsmittel zwischen der Motoraufnahme eines Antriebsgehäuses und der Dämpfungsmittelaufnahme angeordnet ist, sowie ein Formschluss zwischen der Motoraufnahme am Gehäuse und der Dämpfungsmittelaufnahme besteht.

Die EP 2642072 A2 offenbart einen motorgetriebenen Kompressor umfassend einen Elektromotor, einen Kompressionsmechanismus, der von dem Elektromotor angetrieben wird, um Kältemittel zu komprimieren, ein Gehäuse, das den Elektromotor und den Kompressionsmechanismus aufnimmt, und einen Träger mit einer Halterung, die durch ein Befestigungselement an einem Gegenstand zu befestigen ist. Eines der Gehäuse und der Träger hat einen Vorsprung und der andere des Gehäuses und des Trägers hat eine Aussparung, die mit dem Vorsprung durch einen Schwingungsdämpfer in Eingriff steht, so dass der Träger das Gehäuse stützt.

Aufgabe der Erfindung ist es daher bei einem gattungsgemäßen Antrieb dafür zu sorgen, dass dieser auf einfache und wirtschaftliche Weise herstell- und montierbar ist, eine möglichst geringe Teileanzahl und eine zuverlässige Körperschallentkopplung aufweist.

Diese Aufgabe wird erfindungsgemäß durch die Merkmale des Anspruchs 1 gelöst. Es ist vorgesehen, dass zwischen der Motoraufnahme und der Dämpfungsmittelaufnahme ein Formschluss besteht. Dieser Formschluss soll auch bestehen, wenn das Dämpfungsmittel nicht eingebaut ist. Das Dämpfungsmittel kann dennoch einfach und ohne Formschlusskonturen geformt sein und sich an die Formschlusskontur von Motoraufnahme und Dämpfungsmittelaufnahme anpassen. Der oben genannte Formschluss des Dämpfungsmittels in der Dämpfungsmittelaufnahme wird in achsparalleler Richtung durch einen sich radial nach innen erstreckenden ringscheibenartigen Endbereich des Hohlrades gebildet.

Die Dämpfungsmittelaufnahme 8 besteht aus einem mit dem Hohlrad 11 einstückigen ovalen Ansatz und ist axial von einem sich radial nach innen erstreckenden Endbereich 12 des Hohlrades 11 und einer radialen Erweiterung 10 der Dämpfungsmittelaufnahme 8 begrenzt, wodurch ein Formschluss in axialer Richtung gegeben ist, der auch als Verliersicherung oder Transportsicherung für das Dämpfungsmittel 7 dient. Weiterbildungen der Erfindung werden in den Unteransprüchen dargestellt. Der Formschluss ist in erster Linie in einer Rotationsrichtung um eine Motorachse ausgebildet, so dass der Getriebemotor gegen Verdrehen im Antriebsgehäuse gesichert ist.

Weiter ist der Formschluss auch in radialer Richtung zu der Motorachse ausgebildet, damit der Getriebemotor sicher im Antriebsgehäuse gehalten ist.

Zusätzlich ist der Formschluss auch in Motorachsrichtung ausgebildet, so dass der Getriebemotor damit in allen Freiheitsgraden formschlüssig im Antriebsgehäuse gehalten ist.

Bei einer besonders vorteilhaften Weiterbildung der Erfindung ist vorgesehen, dass das Dämpfungsmittel eine elastische und dämpfende Verbindung zwischen der Motoraufnahme und der Dämpfungsmittelaufnahme herstellt. Durch die Elastizität des Dämpfungsmittels kann dieses sich an die Formschlusskonturen der Motoraufnahme und der Dämpfungsmittelaufnahme anpassen und dadurch insbesondere die auftretenden Kräfte in Rotationsrichtung vom Getriebemotor auf das Antriebsgehäuse übertragen, ohne für den eigentlichen Formschluss selbst zu sorgen oder einen solchen aufzuweisen.

Es ist vorgesehen, dass das Dämpfungsmittel in seiner Grundform ringförmig ist, aber mit montierten Zustand nicht kreisförmig angeordnet ist. Dadurch ist eine besonders einfache Geometrie und damit eine besonders einfache Herstellbarkeit gegeben.

Besonders vorteilhaft ist es, wenn der Querschnitt des Dämpfungsmittels über seinen Umfang gleich bleibt. Dadurch könnte der Dämpfungsring im Prinzip entlang seines Umfangs verschoben und verdreht werden, ohne die formschlüssige Wirkung zwischen dem Getriebemotor und der Motoraufnahme aufzuheben.

Damit das Dämpfungselement axial formschlüssig in die Motoraufnahme gefügt werden kann, weist der Querschnitt des Dämpfungsmittels an seiner Außenkontur eine Ringnut auf.

Zweckmäßigerweise ist das Dämpfungsmittel am Getriebemotor, insbesondere der Dämpfungsmittelaufnahme, sowohl in achsparalleler als auch in zur Motorachse radialer Richtung formschlüssig gehalten. Dadurch lässt sich das Dämpfungsmittel auf den Getriebemotor montieren und ist dadurch verliersicher vormontiert. Auf diese Weise kann der Getriebemotor und das Antriebsgehäuse an unterschiedlichen Orten hergestellt werden und später zur Herstellung des Antriebs zusammengeführt werden.

Der Formschluss in achsparalleler Richtung besteht vorzugsweise aus einer radialen ringförmigen Erweiterung der Dämpfungsmittelaufnahme. Das elastische Dämpfungsmittel lässt sich leicht dehnen und über diese ringförmige Erweiterung in die Dämpfungsmittelaufnahme einfügen.

Der Getriebemotor ist in seiner Grundform zylinderförmig und würde auf Grund seiner Außenkontur keinen Formschluss mit dem Antriebsgehäuse eingehen können. Deshalb ist vorgesehen, dass die Motoraufnahme im Antriebsgehäuse und die Dämpfungsmittelaufnahme des Getriebemotors elliptisch, oval oder dergleichen und jedenfalls nicht rotationssymmetrisch ausgebildet sind. Auf diese Weise ist eine Formschlusskontur gegeben. Zwischen der Motoraufnahme und der Dämpfungsmittelaufnahme ist ein Aufnahmeraum für das Dämpfungsmittel freigespart, der so bemessen ist, dass sich auch ohne das Dämpfungsmittel ein Formschluss bilden würde und das Dämpfungsmittel in der Hauptsache zur Dämpfung von Vibrationen des Getriebemotors dient. Das Dämpfungsmittel besitzt keine eigentliche Formschlusskontur, sondern übermittelt lediglich die Drehmomente, die im Betrieb auf das Gehäuse des Getriebemotors wirken über die unrunde Form der Dämpfungsmittelaufnahme auf die ähnlich geformte Motoraufnahme und damit auf das Antriebsgehäuse. Das Dämpfungsmittel wird dabei im Wesentlichen in radialer Richtung gestaucht und kaum in Umfangsrichtung belastet.

Weiter ist vorgesehen das Antriebsgehäuse zweiteilig auszubilden, wobei eine erste Gehäusehälfte einen ersten Teil und eine zweite Gehäusehälfte einen zweiten Teil der Motoraufnahme aufweist. Innerhalb einer Gehäusehälfte ist die jeweilige Teil-Motoraufnahme etwa U-förmig geformt und die Montage des Getriebemotors ist dadurch besonders einfach, weil die Motoraufnahme wie eine Fügehilfe geformt ist.

Bei Rollo-Antrieben werden besonders häufig Planetengetriebe als Untersetzungsgetriebe eingesetzt, weil diese eine zylindrische Außenkontur aufweisen, wie der Elektromotor. In einer Einheit als Getriebemotor lassen sie sich deshalb einfach in ein rohrförmiges Antriebsgehäuse integrieren oder einbauen. Hier wird vorgeschlagen, dass das Planetengetriebe ein Hohlrad aufweist, welches einstückig mit der Dämpfungsmittelaufnahme aus einem Kunststoffmaterial ausgebildet ist. Teileanzahl und der Montageaufwand lässt sich hierdurch reduzieren.

Ein Ausführungsbeispiel der Erfindung wird nachfolgend anhand der Zeichnung näher erläutert. Es zeigen:
- Fig. 1: eine Schnittansicht durch den Antrieb,
- Fig. 2: eine räumliche Teil-Darstellung des Antriebs
- Fig. 3: eine Schnittdarstellung durch eine Motoraufnahme,
- Fig. 4: eine Längs-Schnittdarstellung durch den Antrieb.

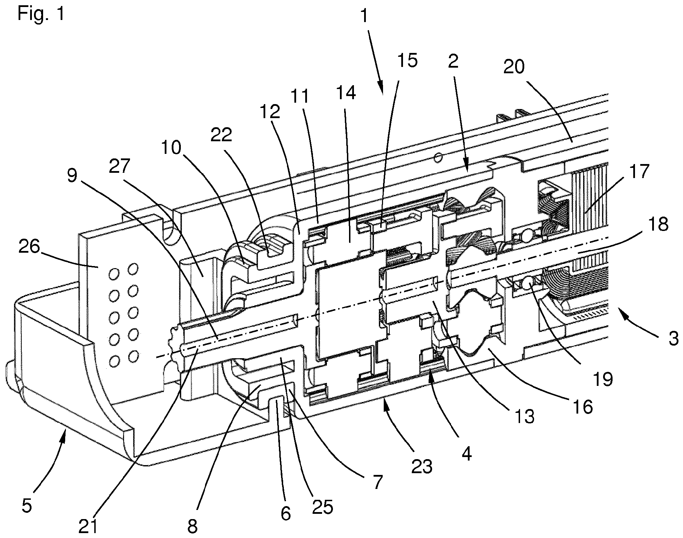

Fig. 1 zeigt eine Schnittansicht durch einen Antrieb 1, bestehend aus einem Getriebemotor 2 und einem Antriebsgehäuse 5. Das Antriebsgehäuse 5 weist eine Motoraufnahme 6 auf, welche in Form einer Zwischenwand ausgebildet ist und eine ovale Ausnehmung aufweist. Vom Antriebsgehäuse 5 ist hier nur eine erste Hälfte dargestellt. Der Getriebemotor ist zusammengesetzt aus einem Elektromotor 3 und einem Untersetzungsgetriebe 4. Der Elektromotor ist hier ein Kommutatormotor mit einem genuteten Rotorblechpaket 17, einer Motorwelle 18, einem Lager 19 (Lagerschild nicht dargestellt) und einem Motorgehäuse 20. Das Motorgehäuse 20 erstreckt sich axial über den Motor hinaus und dient dort als Getriebeaufnahme. Das Untersetzungsgetriebe 4 ist hier in Form eines Planetengetriebes ausgeführt, welches ein Sonnenrad 13, Planetenträger 14, Planetenräder 15, ein erstes Hohlrad 16, ein zweites Hohlrad 11, eine Dämpfungsmittelaufnahme 8 und eine Ausgangswelle 21 aufweist. Die Dämpfungsmittelaufnahme 8 besteht aus einem mit dem zweiten Hohlrad 11 einstückigen ovalen Ansatz und ist axial von einem sich radial nach innen erstreckenden Endbereich 12 des Hohlrades 11 und einer radialen Erweiterung 10 begrenzt, wodurch ein Formschluss in axialer Richtung gegeben ist, der auch als Verliersicherung oder Transportsicherung für das Dämpfungsmittel 7 dient. Das Dämpfungsmittel 7 selbst weist an seiner Außenkontur eine umlaufende Ringnut 22 auf, mit deren Hilfe das Dämpfungsmittel 7 axial formschlüssig in die Motoraufnahme gefügt werden kann. Weiter ist eine Leiterplatte 26 und eine Versteifung 27 dargestellt.

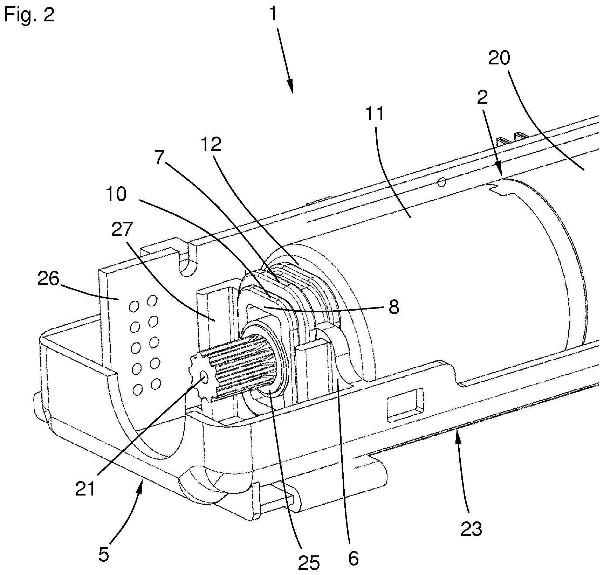

Fig. 2 zeigt eine räumliche Teil-Darstellung des Antriebs 1, mit dem Getriebemotor 2, dem Antriebsgehäuse 5, der Motoraufnahme 6, der Dämpfungsmittelaufnahme 8, dem Dämpfungsmittel 7, dem Motorgehäuse 20, der Ausgangswelle 21, der Leiterplatte 26, der Versteifung 27, der Erweiterung 10 und dem Endbereich 12 des Hohlrades 11. An beiden Enden des Getriebemotors ist eine ähnlich aufgebaute Motoraufnahme 6 vorhanden. Prinzipiell genügt es, wenn eine der beiden Motoraufnahmen mit einer Verdrehsicherung ausgestattet ist.

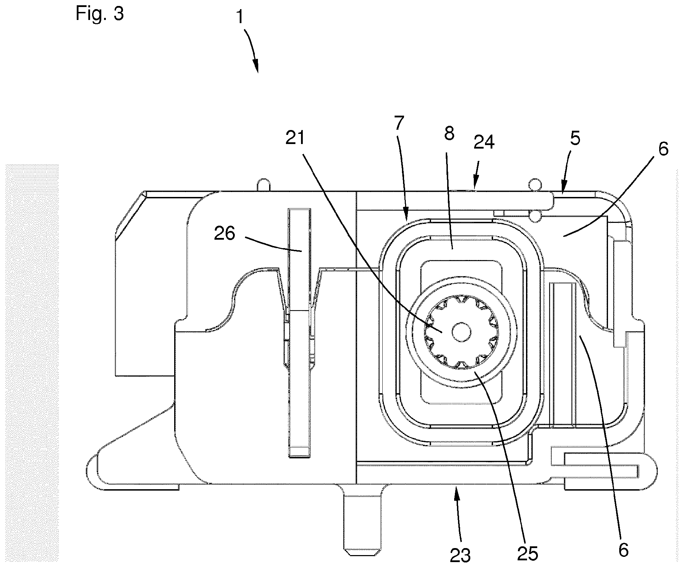

Fig. 3 zeigt eine Schnittdarstellung durch den Antrieb 1, mit dem Antriebsgehäuse 5, der Motoraufnahme 6, welche einerseits in einem Gehäuseunterteil 23 und andererseits in einem Gehäuseoberteil 24 ausgebildet ist, dem Dämpfungsmittel 7, der Dämpfungsmittelaufnahme 8, einer Ausgangswelle 21, dem Ausgangswellenlager 25 und der Leiterplatte 26.

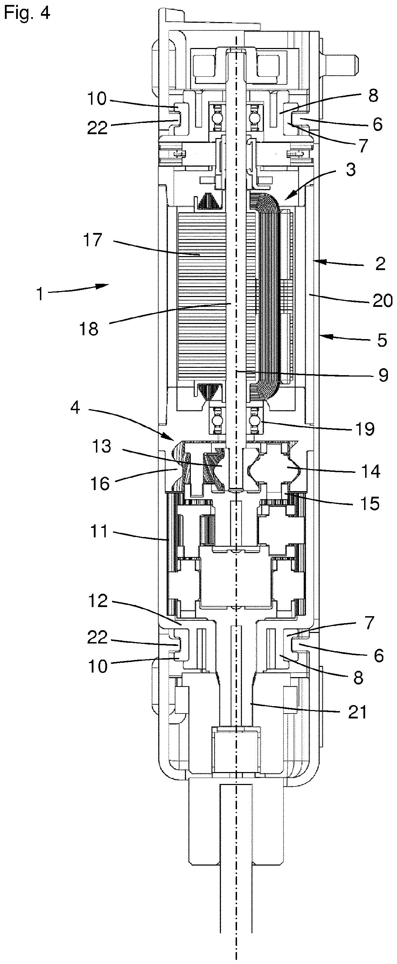

Fig. 4 zeigt eine Schnittdarstellung durch die Motoraufnahme 6 einer Variante des Antriebs 1, mit einem Getriebemotor 2, bestehend aus einem Elektromotor 3 und einem Untersetzungsgetriebe 4, einem Antriebsgehäuse 5, einer Motoraufnahme 6, einem Dämpfungsmittel 7, einer Dämpfungsmittelaufnahme 8, einer Motorachse einer Erweiterung 10, einem ersten Hohlrad 16, einem zweiten Hohlrad 11, einem Sonnenrad 13, einem Planetenträger 15, einem Planetenrad 14, einem Rotorblechpaket 17, einer Motorwelle 18, einem Lager 19, einem Motorgehäuse, einer Ausgangswelle 21 und einer Ringnut 22.

### Bezugszeichenliste

- 1: Antrieb
- 2: Getriebemotor
- 3: Elektromotor
- 4: Untersetzungsgetriebe
- 5: Antriebsgehäuse
- 6: Motoraufnahme
- 7: Dämpfungsmittel
- 8: Dämpfungsmittelaufnahme
- 9: Motorachse
- 10: Erweiterung
- 11: zweites Hohlrad
- 12: Endbereich
- 13: Sonnenrad
- 14: Planetenrad
- 15: Planetenträger
- 16: erstes Hohlrad
- 17: Rotorblechpaket
- 18: Motorwelle
- 19: Lager
- 20: Motorgehäuse
- 21: Ausgangswelle
- 22: Ringnut
- 23: Gehäuseunterteil
- 24: Gehäuseoberteil
- 25: Ausgangswellenlager
- 26: Leiterplatte
- 27: Versteifung

## Patentansprüche

1. Antrieb (1), mit einem Getriebemotor (2), bestehend aus einem Elektromotor (3) und einem Untersetzungsgetriebe (4), einem Antriebsgehäuse (5), einer Motoraufnahme (6) für den Getriebemotor (2), einem zwischen der Motoraufnahme (6) und dem Getriebemotor (2) angeordneten Dämpfungsmittel (7) und einer Dämpfungsmittelaufnahme (8) für das Dämpfungsmittel (7) am Getriebemotor (2), wobei zwischen der Motoraufnahme (6) und der Dämpfungsmittelaufnahme (8) Formschluss besteht, **dadurch gekennzeichnet, dass** der Formschluss in achsparalleler Richtung durch einen sich radial nach innen erstreckenden ringscheibenartigen Endbereich (12) eines Hohlrades (11) gebildet ist und dass die Dämpfungsmittelaufnahme (8) aus einem mit dem Hohlrad (11) einstückigen ovalen Ansatz besteht und axial von einem sich radial nach innen erstreckenden Endbereich (12) des Hohlrades (11) und einer radialen Erweiterung (10) der Dämpfungsmittelaufnahme (8) begrenzt ist, wodurch ein Formschluss in axialer Richtung gegeben ist, der auch als Verliersicherung oder Transportsicherung für das Dämpfungsmittel (7) dient.

2. Antrieb nach Anspruch 1, **dadurch gekennzeichnet, dass** der Formschluss in einer Rotationsrichtung um eine Motorachse (9) ausgebildet ist.

3. Antrieb nach Anspruch 1 oder 2, **dadurch gekennzeichnet, dass** der Formschluss radial zu der Motorachse (9) ausgebildet ist.

4. Antrieb nach Anspruch 1, 2 oder 3, **dadurch gekennzeichnet, dass** der Formschluss in Motorachsrichtung ausgebildet ist.

5. Antrieb nach Anspruch 1, 2, 3 oder 4 **dadurch gekennzeichnet, dass** das Dämpfungsmittel (7) eine elastische und dämpfende Verbindung zwischen der Motoraufnahme (6) und der Dämpfungsmittelaufnahme (8) herstellt.

6. Antrieb nach Anspruch 1, 2, 3, 4 oder 5, **dadurch gekennzeichnet, dass** das Dämpfungsmittel (7) in seiner Grundform ringförmig und im montierten Zustand nicht kreisförmig ist.

7. Antrieb nach Anspruch 6, **dadurch gekennzeichnet, dass** der Querschnitt des Dämpfungsmittels (7) über seinen Umfang gleich bleibt.

8. Antrieb nach Anspruch 6 oder 7, **dadurch gekennzeichnet, dass** der Querschnitt des Dämpfungsmittels (7) an seiner Außenkontur eine Ringnut (22) aufweist.

9. Antrieb nach zumindest einem der vorangehenden Ansprüche, **dadurch gekennzeichnet, dass** das Dämpfungsmittel (7) am Getriebemotor (2), insbesondere der Dämpfungsmittelaufnahme (8), sowohl in achsparalleler als auch in zur Motorachse (9) radialer Richtung formschlüssig gehalten ist.

10. Antrieb nach Anspruch 9, **dadurch gekennzeichnet, dass** der Formschluss in achsparalleler Richtung aus einer radialen ringförmigen Erweiterung (10) der Dämpfungsmittelaufnahme (8) besteht.

11. Antrieb nach zumindest einem der vorangehenden Ansprüche, **dadurch gekennzeichnet, dass** der Getriebemotor (2) in seiner Grundform zylinderförmig ist.

12. Antrieb nach zumindest einem der vorangehenden Ansprüche, **dadurch gekennzeichnet, dass** die Motoraufnahme (6) und die Dämpfungsmittelaufnahme (8) oval und nicht rotationssymmetrisch ausgebildet sind.

13. Antrieb nach zumindest einem der vorangehenden Ansprüche, **dadurch gekennzeichnet, dass** das Antriebsgehäuse zweiteilig ausgebildet ist, wobei eine erste Gehäusehälfte einen ersten Teil und eine zweite Gehäusehälfte einen zweiten Teil der Motoraufnahme (6) aufweist.

14. Antrieb nach zumindest einem der vorangehenden Ansprüche, **dadurch gekennzeichnet, dass** das Untersetzungsgetriebe (4) ein Planetengetriebe mit einem Hohlrad (11) aufweist, welches einstückig mit der Dämpfungsmittelaufnahme (8) aus einem Kunststoffmaterial ausgebildet ist.

## Claims

1. A drive (1), with a geared motor (2), consisting of an electric motor (3) and a step-down gear (4), a drive housing (5), a motor mount (6) for the geared motor (2), a damping means (7) arranged between the motor mount (6) and the geared motor (2), and a damping means receptacle (8) for receiving the damping means (7) on the geared motor (2), wherein there is a form fit between the motor mount (6) and the damping means receptacle (8), **characterised in that** the form fit is formed in the paraxial direction by a ring-disc-like end region (12), extending radially inwards, of an annular gear (11), and **in that** the damping means receptacle (8) consists of an oval shoulder which is in one piece with the ring gear (11) and is delimited axially by an end region (12), extending radially inwards, of the annular gear (11) and a radial extended portion (10) of the damping means receptacle (8), as a result of which a form fit in the axial direction is produced which also serves as a loss prevention means or transport restraint for the damping means (7).

2. A drive according to Claim 1, **characterised in that** the form fit is formed in a direction of rotation about a motor axis (9).

3. A drive according to Claim 1 or 2, **characterised in that** the form fit is formed radially to the motor axis (9).

4. A drive according to Claim 1, 2 or 3, **characterised in that** the form fit is formed in the direction of the motor axis.

5. A drive according to Claim 1, 2, 3 or 4, **characterised in that** the damping means (7) produces an elastic and damping connection between the motor mount (6) and the damping means receptacle (8).

6. A drive according to Claim 1, 2, 3, 4 or 5, **characterised in that** the damping means (7) is annular in its basic form and is non-circular in the mounted state.

7. A drive according to Claim 6, **characterised in that** the cross-section of the damping means (7) remains the same over its circumference.

8. A drive according to Claim 6 or 7, **characterised in that** the cross-section of the damping means (7) has an annular groove (22) on its outer contour.

9. A drive according to at least one of the preceding claims, **characterised in that** the damping means (7) is held in a form fit on the geared motor (2), in particular the damping means receptacle (8), both in the paraxial direction and in the direction radial to the motor axis (9).

10. A drive according to Claim 9, **characterised in that** the form fit in the paraxial direction consists of a radial annular extended portion (10) of the damping means receptacle (8).

11. A drive according to at least one of the preceding claims, **characterised in that** the geared motor (2) is cylindrical in its basic form.

12. A drive according to at least one of the preceding claims, **characterised in that** the motor mount (6) and the damping means receptacle (8) are designed to be oval and not rotationally symmetrical.

13. A drive according to at least one of the preceding claims, **characterised in that** the drive housing is formed in two parts, with a first housing half having a first part and a second housing half having a second part of the motor mount (6).

14. A drive according to at least one of the preceding claims, **characterised in that** the step-down gear (4) has a planetary gear set with a ring gear (11) which is formed from a plastics material in one piece with the damping means receptacle (8).

## Revendications

1. Entraînement (1), muni d'un moto-réducteur (2), constitué d'un moteur électrique (3) et d'un réducteur (4), d'un boîtier d'entraînement (5), d'un support de moteur (6) pour le moto-réducteur (2), d'un moyen d'amortissement (7) disposé entre le support de moteur (6) et le moto-réducteur (2) et d'un support de moyen d'amortissement (8) pour le moyen d'amortissement (7) sur le moto-réducteur (2), une complémentarité de forme existant entre le support de moteur (6) et le support de moyen d'amortissement (8), **caractérisé en ce que** la complémentarité de forme est constituée dans le sens parallèle à l'axe par une zone terminale (12) d'une roue creuse (11) de type disque annulaire et s'étendant radialement vers l'intérieur et **en ce que** le support de moyen d'amortissement (8) est constitué d'un prolongement ovale monobloc avec la roue creuse (11) et est délimité axialement par une zone terminale (12) de la roue creuse (11) s'étendant vers l'intérieur radialement et une extension radiale (10) du support de moyen d'amortissement (8), moyennant quoi une complémentarité de forme est obtenue dans le sens axial, laquelle sert aussi à la sécurisation contre la perte ou la sécurisation contre le transport pour le moyen d'amortissement (7).

2. Entraînement selon la revendication 1, **caractérisé en ce que** la complémentarité de forme est constituée dans un sens de rotation autour d'un axe de moteur (9).

3. Entraînement selon la revendication 1 ou 2, **caractérisé en ce que** la complémentarité de formes est constituée radialement par rapport à l'axe de moteur (9).

4. Entraînement selon la revendication 1, 2 ou 3, **caractérisé en ce que** la complémentarité de formes est constituée dans le sens de l'axe de moteur.

5. Entraînement selon la revendication 1, 2, 3 ou 4, **caractérisé en ce que** le moyen d'amortissement (7) crée une liaison élastique et amortisseuse entre le support de moteur (6) et le support de moyen d'amortissement (8).

6. Entraînement selon la revendication 1, 2, 3, 4 ou 5, **caractérisé en ce que** le moyen d'amortissement (7) est circulaire dans sa forme de base et n'est pas circulaire à l'état monté.

7. Entraînement selon la revendication 6, **caractérisé en ce que** la section transversale du moyen d'amortissement (7) reste identique sur toute sa circonférence.

8. Entraînement selon la revendication 6 ou 7, **caractérisé en ce que** la section transversale du moyen d'amortissement (7) présente une rainure circulaire (22) sur son contour extérieur.

9. Entraînement selon au moins l'une des revendications précédentes, **caractérisé en ce que** le moyen d'amortissement (7) sur le moto-réducteur (2), en particulier le support du moyen d'amortissement (8), est supporté par complémentarité de forme aussi bien dans le sens parallèle à l'axe que dans le sens radial par rapport à l'axe du moteur (9).

10. Entraînement selon la revendication 9, **caractérisé en ce que** la complémentarité de forme est constituée, dans le sens parallèle à l'axe, d'une extension circulaire radiale (10) du support de moyen d'amortissement (8).

11. Entraînement selon au moins l'une des revendications précédentes, **caractérisé en ce que** le moto-réducteur (2) est de forme cylindrique dans sa forme de base.

12. Entraînement selon au moins l'une des revendications précédentes, **caractérisé en ce que** le support de moteur (6) et le support de moyen d'amortissement (8) sont conçus de manière ovale et non symétrique en rotation.

13. Entraînement selon au moins l'une des revendications précédentes, **caractérisé en ce que** le boîtier d'entraînement est formé en deux parties, une première moitié du boîtier présentant une première partie et une deuxième moitié du boîtier présentant une deuxième partie du support de moteur (6).

14. Entraînement selon au moins l'une des revendications précédentes, **caractérisé en ce que** le réducteur (4) présente un engrenage planétaire muni d'une roue creuse (11), qui est conçu en un seul bloc avec le support de moyen d'amortissement (8) en un matériau plastique.
